# EUROPEAN PATENT SPECIFICATION

(11) **EP 3 012 454 B1**
(45) Date of publication and mention of the grant of the patent: **01.02.2017**
(21) Application number: 15188109.1
(22) Date of filing: 02.10.2015
(51) Int. Cl.: F04B 27/18, F16K 27/02, F16K 31/06

(54) **CONTROL VALVE**
REGELVENTIL
VANNE DE CONTRÔLE

(30) Priority: 08.10.2014 JP 2014207179
(43) Date of publication of application: 27.04.2016
(73) Proprietor: TGK CO., Ltd., Tokyo 193-0942 (JP)
(72) Inventor: Yoshihiro, Ryousuke, Tokyo, 193-0942 (JP); Kajiwara, Morimitsu, Tokyo, 193-0942 (JP)
(74) Representative: Schröer, Gernot H.

(56) References cited:
- EP-A1- 2 194 273
- WO-A1-2014/148497
- JP-A- 2009 299 674

## Description

The present invention relates to a control valve capable of controlling the discharging capacity of a variable displacement compressor.

Generally used for a refrigeration cycle is a variable displacement compressor (hereinafter referred to simply as "compressor" also) capable of varying the refrigerant discharging capacity in order to maintain a constant level of cooling capacity irrespective of the engine speed. A control valve driven by a solenoid is often used to control the capacity of this compressor (see Reference (1) in the following Related Art List, for instance).

In this compressor, a piston for compression is linked to a wobble plate, which is mounted to a rotational shaft rotatingly driven by an engine. The refrigerant discharging rate is regulated by changing the stroke of the piston through changes in the angle of the wobble plate. The angle of the wobble plate is changed continuously by changing the balance of pressure working on both faces of the piston as part of the discharged refrigerant is introduced into a hermetically-closed crankcase. A mounting hole leading to a refrigerant passage is formed in a housing of the compressor. The control valve is mounted such that the control valve is inserted into the mounting hole from a tip side thereof (a side thereof opposite to a solenoid). The control valve controls at least one of the flow rate of refrigerant led into the crankcase from a discharge chamber and the flow rate of refrigerant led out to a suction chamber from the crankcase, so that the discharging capacity of the compressor is varied.

Such a control valve is of an outer shape such that the diameter thereof is reduced in stages toward the tip thereof to fit on the shape of the mounting hole, and a plurality of seal rings are fitted on an outer peripheral surface of the control valve. These seal rings include a first seal ring and a second seal ring. Here, the first seal ring is placed in a depth direction of the mounting hole and is used to restrict the external leakage of refrigerant from the refrigerant passage; the second seal ring is placed near an opening of the mounting hole and is used to restrict the entry of moisture from outside. A fixed member such as a washer is assembled to the opening of the mounting hole and thereby the control valve is supported from behind and is stably held inside the mounting hole.

### Related Art List

(1) Japanese Unexamined Patent Application Publication No. 2009-299674.

In recent years, spurred by the global warming issue, it is being proposed that alternative chlorofluorocarbon (CFC), which is conventionally used as the refrigerant used in the refrigeration cycle, be replaced by carbon dioxide and the like. However, in the refrigeration cycle where, for example, carbon dioxide is used, the pressure of refrigerant is increased to a supercritical range exceeding the critical temperature thereof and therefore the pressure of refrigerant gets very high. Also, carbon dioxide is more likely to permeate the seal ring than alternate CFCs. As a result, it is probable that the refrigerant, which has permeated the first seal ring, allows a space, between the first seal ring and the second seal ring, to become high-pressured, and that subsequently a force by which the control valve is pushed out toward the exterior is exerted via the second seal ring. This may possibly make it difficult for the control valve to be stably held inside the mounting hole, depending on the strength of the fixed member.

A purpose of the present invention is to reliably prevent the falling-off of the control valve from the variable displacement compressor in the event that the refrigerant used for the refrigeration cycle gets high-pressured.

One embodiment of the preset invention relates to a control valve for controlling a flow of refrigerant in a variable displacement compressor, the control valve being housed within and assembled into a mounting hole from a tip thereof, the mounting hole being formed in a housing of the compressor. The control valve includes:
a body having a plurality of ports through which the refrigerant is introduced or delivered, a refrigerant passage through which the refrigerant is made to pass, and a valve hole formed in the refrigerant passage; a valve element for opening and closing a valve section, the valve element being arranged in such a manner as to move toward and away from the valve hole; a solenoid that generates a force with which to drive the valve element in a valve closing direction in accordance with an amount of current supplied, the solenoid being arranged in a rear end side of the body; a first seal ring, made of resin, which restricts an external leakage of refrigerant by way of a gap between the body and the mounting hole, the first seal ring being assembled in such a manner as to be placed around the body; a second seal ring, made of resin, which restricts entry of moisture by way of a gap between the solenoid and the mounting hole, the second seal ring being assembled in such a manner as to be placed around the solenoid; and a pressure response part that lowers a sealing power of the second seal ring and releases a pressure to outside air, when the pressure of a space between the first seal ring and the second seal ring in the mounting hole is greater than or equal to a preset pressure.

By employing this embodiment, when the pressure of the space between the first seal ring and the second seal ring in the mounting hole is greater than or equal to the preset pressure, the pressure response part lowers the sealing power (sealing property) of the second seal ring and then releases the pressure to outside air. Thus, in the event that the pressure of the refrigerant gets high, the pressure of the space will not be excessively high, so that the falling-off of the control valve from the compressor can be reliably prevented.

FIG. 1 is a system chart showing a refrigeration cycle of an automotive air conditioner according to a first embodiment;
FIG. 2 is a cross-sectional view showing a structure of a control valve according to a first embodiment;
FIG. 3 is a partially enlarged cross-sectional view of the upper half of FIG. 2;
FIG. 4 is a partial cross-sectional view showing a state where a control valve is mounted on a compressor;
FIG. 5 is an enlarged view of the lower half of FIG. 4;
FIGS. 6A and 6B show major components of a control valve according to a second embodiment;
FIGS. 7A and 7B show major components of a control valve according to a third embodiment; and
FIGS. 8A and 8B show major components of a control valve according to a fourth embodiment.

The invention will now be described by reference to the preferred embodiments. This does not intend to limit the scope of the present invention, but to exemplify the invention.

Embodiments of the present invention will now be described in detail with reference to the accompanying drawings. In the following description, for convenience of description, the positional relationship in each structure may be expressed as "vertical" or "up-down" with reference to how each structure is depicted in Figures.

### [First Embodiment]

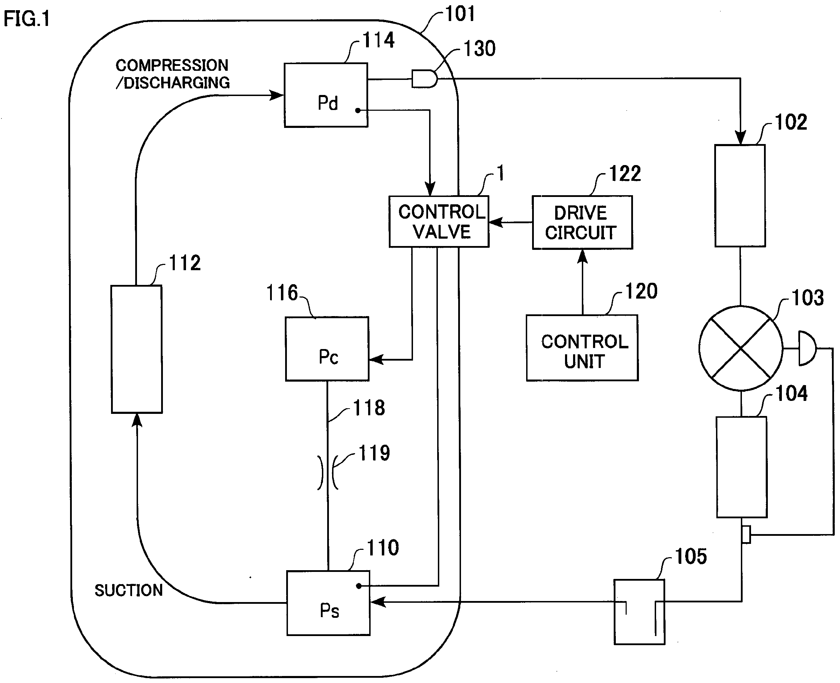

FIG. 1 is a system chart showing a refrigeration cycle of an automotive air conditioner according to a first embodiment.

The air conditioner according to the present embodiment includes a so-called supercritical refrigeration cycle that uses carbon dioxide, which operates under a high pressure, as the refrigerant. This air conditioner includes a variable displacement compressor (hereinafter referred to simply as "compressor" also) 101, a gas cooler 102, an expander 103, an evaporator 104, and a receiver 105. Here, the compressor 101 compresses a gaseous refrigerant circulating through the refrigeration cycle. The gas cooler 102 functions as an external heat exchanger that cools a compressed high-pressure gaseous refrigerant. The expander 103 adiabatically expands the cooled refrigerant so as to reduce the pressure thereof. The evaporator 104 evaporates the expanded refrigerant and removes the evaporative latent heat so as to cool air inside a vehicle's compartment. The receiver 105 separates the evaporated refrigerant into gas refrigerant and liquid refrigerant and then returns the thus separated gaseous carbon dioxide to the compressor 101.

The compressor 101 has a not-shown rotational shaft, which is freely rotatably supported within a crankcase 116, which functions as a "control chamber". A wobble plate is tiltably provided in this rotational shaft. And an end of the rotational shaft extends outside the crankcase 116 and is connected to an output shaft of an engine by way of a pulley. A plurality of cylinders 112 are arranged around the rotational shaft, and a piston, which performs a reciprocating motion by the rotational motion of the wobble plate, is provided in each cylinder 112. Each cylinder 112 is connected to a suction chamber 110 through a suction valve and is connected to a discharge chamber 114 through a discharge valve. The compressor 101 compresses the refrigerant, which has been led into the cylinders 112 through the suction chamber 110, and discharges the compressed refrigerant through the discharge chamber 114.

The angle of the wobble plate of the compressor 101 is kept in a position where, for example, the load of a spring biasing the wobble plate in the crankcase 116 and the load caused by the pressures working on both faces of the piston connected to the wobble plate are balanced. This angle of the wobble plate can be changed continuously as follows. That is, a crank pressure Pc is changed as part of the discharged refrigerant is introduced into the crankcase 116, and the balance of pressures working on the both faces of the piston is changed, thereby changing continuously the angle thereof. Changing the stroke of the piston by varying the angle of the wobble plate regulates the discharging capacity of refrigerant. The crank pressure Pc is controlled by a control valve 1, which is provided between the discharge chamber 114 and the crankcase 116 of the compressor 101.

In other words, a part of the discharged refrigerant of the compressor 101 is led into the crankcase 116 by way of the control valve 1 and is used to control the capacity of the compressor 101. The control valve 1 is configured as a solenoid-driven electromagnetic valve, and the electric conduction state and/or amount is controlled by a control unit 120. In the present embodiment, the control unit 120 outputs a pulse signal, which has been set to a predetermined duty ratio, to a drive circuit 122. Then the control unit 120 has the drive circuit 122 output a current pulse associated with the duty ratio. In this manner, the solenoid is driven. The control valve 1 regulates the flow rate of refrigerant delivered from the discharge chamber 114 to the crankcase 116 such that a differential pressure (Pd - Ps) between a discharge pressure Pd and a suction pressure Ps of the compressor 101 can be brought closer to a preset differential pressure, which is a control target value. Thereby, the discharging capacity of the compressor 101 varies. That is, the control valve 1 functions as a so-called (Pd - Ps) differential pressure regulating valve.

An orifice 119 is provided in a refrigerant passage 118 through which the crankcase 116 and the suction chamber 110 communicate. The refrigerant inside the crankcase 116 is leaked to a suction chamber 110 side through the orifice 119, so that the crank pressure Pc will not be excessively high. A check valve 130 is provided in a refrigerant passage provided between the discharge chamber 114 and a refrigerant outlet in the compressor 101.

The control unit 120 includes a CPU for performing various arithmetic processings, a ROM for storing various control programs, a RAM used as a work area for data storage and program execution, an I/O interface, and so forth. The control unit 120 has a PWM output unit for outputting a pulse signal having a specified duty ratio. However, such a PWM output unit may be configured using a known art and therefore the detailed description thereof is omitted here. The control unit 120 determines the aforementioned preset differential pressure, based on predetermined external information detected by various sensors (e.g., the engine speed, the temperatures inside and outside the passenger compartment, and the air-blowout temperature of the evaporator 104). Also, the control unit 120 controls the electric conduction state of and/or amount to the control valve 1 in order to obtain a solenoidal force required to maintain the preset differential pressure. Suppose now that there is a request for cutting down on the acceleration for the purpose of reducing the load torque of the compressor 101 during a high load state (e.g., while a vehicle is accelerating or running uphill). Then, the control unit 120 turns off the solenoid or suppresses the electric conduction amount to a predetermined lower limit, and thereby switches the variable displacement compressor to an operation mode where the compressor operates with the minimum capacity.

The expander 103, which is configured as a so-called thermostatic-expansion valve, regulates a valve opening degree by feeding back the temperature of refrigerant at an outlet side of the evaporator 104 and then supplies a liquid refrigerant, which meets a thermal load, to the evaporator 104. The refrigerant, which has passed through the evaporator 104, is returned to the compressor 101 via the receiver 105 and is again compressed.

The check valve 130 maintains its opened state as long as the discharging capacity of the compressor 101 is large to a certain degree and a differential pressure (Pd - Pd1) between the discharge pressure Pd of the discharge chamber 114 and an outlet pressure Pd1 at the refrigerant outlet exceeds a valve opening differential pressure. This valve opening differential pressure is set by the load of a built-in spring of the check valve 130. If, in contrast thereto, the discharging capacity of the compressor 101 is small and the discharge pressure Pd does not sufficiently get high (e.g., during a minimum capacity operation), the check valve 130 will be closed due to the biasing force of the spring and thereby the back-flow of refrigerant from a gas cooler 102 side to the discharge chamber 114 will be prevented. Note that the check valve 130 is closed while the compressor 101 is operating with the minimum capacity. However, the refrigerant discharged from the discharge chamber 114 is returned to the suction chamber 110 via the control valve 1 and the crankcase 116. Thus, the internal circulation of refrigerant gas within the compressor 101 is assured.

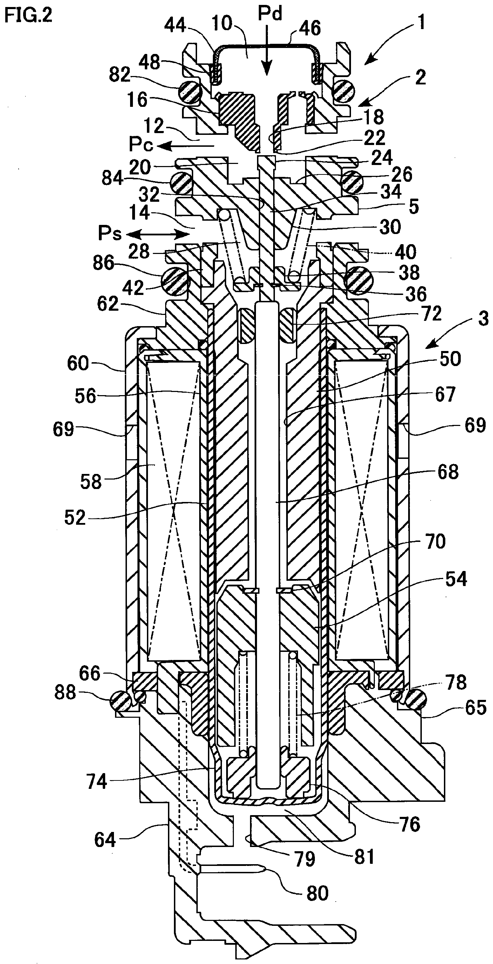

FIG. 2 is a cross-sectional view showing a structure of the control valve 1 according to the first embodiment. The control valve 1 is constituted by integrally assembling a valve unit 2 and a solenoid 3. The valve unit 2 has a body 5 of stepped cylindrical shape. Though the body 5 is formed of brass in the present embodiment, it may be formed of an aluminum alloy. The body 5 has ports 10, 12, and 14 in this order from top down. Of these ports, the port 10 is provided in an upper end of the body 5, and the ports 12 and 14 are each provided on a lateral side thereof. The port 10 functions as a "discharge chamber communication port" that communicates with the discharge chamber 114. The port 12 functions as a "crankcase communication port" (corresponding to a "control chamber communication port") that communicates with the crankcase 116. The port 14 functions as a "suction chamber communication port" that communicates with the suction chamber 110. Though the "control chamber" in the present embodiment is formed by the crankcase, it may be a pressure chamber separately provided within or outside the crankcase, in a modification.

In the body 5, a valve seat forming member 16 of stepped cylindrical shape is provided in a passage that communicates between the port 10 and the port 12. The valve seat forming member 16 is formed by quenching a stainless steel (e.g., SUS420), and is formed of a metal whose hardness is higher than that of the body 5. The valve seat forming member 16 is coaxially inserted into an upper portion of the body 5 and is secured such that the upper portion of the body 5 is swaged inward. Note that in a modification, the valve seat forming member 16 may be secured by pressure-fitting it to the body 5. The valve seat forming member 16 has a through-hole along an axis line, and a lower half of the through-hole forms a valve hole 18. A valve chamber 20, which communicates with the port 12, is formed below the valve seat forming member 16 in the body 5. The lower half of the valve seat forming member 16 is of tapered shape such that the outside diameter thereof is gradually reduced from an upper part to a lower part of the lower half thereof, and the lower half thereof extends into the valve chamber 20. A valve seat 22 is formed on a lower end surface of the valve seat forming member 16. A valve element 24 is provided in the valve chamber 20 in such a manner as to face the valve seat 22 from below. The opening degree of a valve section is regulated by moving the valve element 24 toward and away from the valve seat 22.

A partition wall 26 is so provided that an internal space of the body 5 is divided into an upper space and a lower space. The valve chamber 20 is formed on an upper side of the partition wall 26, and a working chamber 28 is formed on a lower side thereof. The valve chamber 20 communicates with the crankcase 116 through the port 12. The working chamber 28 communicates with the suction chamber 110 through the port 14. A guide portion 30, which extends in a direction of axis line, is provided in a center of the partition wall 26. A guiding passage 32 is so formed as to run through the guide portion 30 along the axis line, and an elongated actuating rod 34 is slidably inserted to the guiding passage 32 in the direction of axis line. The valve element 24 is provided coaxially on an upper end of the actuating rod 34. The valve element 24 and the actuating rod 34 are formed integrally with each other by performing a cutting work on a stainless steel.

The guide portion 30 protrudes as a small bump on an upper surface side of the partition wall 26 and protrudes as a large protrusion on a lower surface side thereof. The guide portion 30 is of tapered shape such that the outside diameter thereof is gradually reduced from an upper part to a lower part thereof, and the guide portion 30 extends into the working chamber 28. With this configuration and arrangement, a sufficient length of the guiding passage 32 is ensured and the actuating rod 34 is stably supported. The valve element 24 and the actuating rod 34 operate and move integrally together with each other, and the valve element 24 closes and opens the valve section by touching and leaving the valve seat 22, respectively, on the upper end surface of the valve element 24. The hardness of the valve seat forming member 16 is sufficiently high. Thus, the valve seat 22 is hardly deformed by repeated seating of the valve element 24 on the valve seat 22, thereby ensuring the durability of the valve section.

A retaining ring 36 (E-ring) is fitted to a lower part of the actuating rod 34, and a discoidal spring support 38 is provided such that the movement of the lower part of thereof in a downward direction is restricted. A spring 40, which biases the actuating rod 34 downward (in a valve closing direction) (functioning as a "first biasing member"), is set between the spring support 38 and the partition wall 26. The spring 40 is a tapered spring where the diameter thereof is reduced starting from the lower surface of the partition wall 26 toward the spring support 38 located therebelow. Having the guide portion 30 formed in a tapered shape as described above allows the tapered-shape spring 40 to be arranged as described above. A lower part of the body 5 is a small-diameter part 42 and constitutes a coupling portion with the solenoid 3.

A filter member 44, which suppresses foreign materials from entering the port 10, is fitted in an upper end opening of the body 5. Since the foreign material, such as metallic powders, may possibly be contained in the refrigerant discharged from the compressor 101, the filter member 44 prevents or suppresses the foreign material from entering the interior of the control valve 1. The filter member 44 has a bottomed cylindrical filter 46 and is configured such that an opening end of the filter 46 is reinforced by a ring-shaped metallic plate 48. The filter 46 is formed using a metal mesh. The filter member 44 is secured such that the metallic plate 48 is press-fitted to the body 5 while the bottom of the filter member 44 faces upward. As shown in FIG. 2, the filter member 44 is mounted inside the body 5, so that any deformation thereof caused by physical contact with an external structure is prevented.

The solenoid 3 includes a cylindrical core 50, a bottomed cylindrical sleeve 52 inserted around the core 50, a plunger 54, which is contained in the sleeve 52 and which is disposed opposite to the core 50 in the direction of axis line, a cylindrical bobbin 56 inserted around the sleeve 52, an electromagnetic coil 58 wound around the bobbin 56, a cylindrical casing 60, which is so provided as to cover the electromagnetic coil 58 from outside, a connecting member 62 of stepped cylindrical shape, which is assembled, between the core 50 and the casing 60, in a position above the bobbin 56, and an end member 64, which is so provided as to seal off a lower end opening of the casing 60. Note that the connecting member 62 constitutes not only the body 5 but also the "body" of the valve unit 2, and at the same time the connecting member 62 functions as a "casing" of the solenoid 3.

The sleeve 52, which is formed of a non-magnetic material, houses the plunger 54 in a lower half thereof. A circular collar 66 is embedded in the end member 64. The collar 66 is set, between the sleeve 52 and the casing 60, in a position below the bobbin 56. The casing 60, the connecting member 62 and the collar 66, which are each formed of a magnetic material, form a yoke of the solenoid 3. When the solenoid electrically conducts, a magnetic circuit MC is formed by the yoke, the core 50 and the plunger 54. The valve unit 2 and the solenoid 3 are secured such that the small-diameter part 42 (lower end part) of the body 5 is press-fitted to an upper end opening of the connecting member 62.

An insertion hole 67 is so formed as to run through the core 50 in a center thereof in the direction of axis line. And a shaft 68 is inserted into the insertion hole 67 in such a manner as to penetrate along the insertion hole 67. The shaft 68 is formed coaxially with the actuating rod 34 and supports the actuating rod 34 from below. The diameter of the shaft 68 is larger than that of the actuating rod 34. The plunger 54 is assembled to a lower half of the shaft 68. In the present embodiment, the shaft 68 and the actuating rod 34 constitute a "transmitting rod" that transmits the solenoidal force to the valve element 24.

The plunger 54 is coaxially supported by the shaft 68 in an upper portion of the plunger 54. A retaining ring 70 (E-ring) is fitted to a predetermined position in an intermediate part of the shaft 68 in the direction of axis line, and the retaining ring 70 works to restrict the movement of the plunger 54 in an upward direction. A communicating groove formed in parallel with the axis line is provided on a lateral surface of the plunger 54. The communicating groove forms a communicating path through which the refrigerant is made to pass between the plunger 54 and sleeve 52.

A ring-shaped shaft support member 72 is press-fitted in an upper end of the core 50, and an upper end of the shaft 68 is slidably supported by the shaft support member 72 in the direction of axis line. An outer periphery of the shaft support member 72 is partially notched and thereby a communicating path is formed between the core 50 and the shaft support member 72. Through this communicating path, the suction pressure Ps of the working chamber 28 is led into the interior of the solenoid 3, too.

The diameter of a lower end of the sleeve 52 is slightly reduced, and a ring-shaped shaft support member 76 (functioning as a "supporting member") is press-fitted to a reduced diameter portion 74 of the sleeve 52. The shaft support member 76 slidably supports a lower end part of the shaft 68. In other words, the shaft 68 is two-point supported by both the shaft support member 72 in an upper side thereof and the shaft support member 76 in a lower side thereof, so that the plunger 54 can be stably operated in the direction of axis line. An outer periphery of the shaft support member 76 is partially notched and thereby a communicating path is formed between the sleeve 52 and the shaft support member 76. The suction pressure Ps introduced into the solenoid 3 fills the interior of the sleeve 52 through the communicating path between the core 50 and the shaft 68, the communicating path between the plunger 54 and the sleeve 52, and the communicating path between the shaft support member 76 and the sleeve 52.

A spring 78 (functioning as a "second spring") that biases the plunger 54 in an upward direction, namely in a valve closing direction, is set between the shaft support member 76 and the plunger 54. In other words, as the spring load, the valve element 24 receives the net force of a force exerted by the spring 40 in a valve opening direction and a force exerted by the spring 78 in a valve closing direction. However, the spring load of the spring 40 is larger than that of the spring 78. Thus, the overall spring load of the springs 40 and 78 works in a valve opening direction. The spring load thereof can be set by adjusting the press-fitting position of the shaft support member 76 in the sleeve 52. The press-fitting position thereof can be fine-adjusted such that a bottom center of the sleeve 52 is deformed in the direction of axis line by using a predetermined tool after the shaft support member 76 has been temporarily press-fitted to the sleeve 52.

A pair of connection terminals 80 connected to the electromagnetic coil 58 extend from the bobbin 56 and are led outside by passing through the end member 64. Note that only one of the pair of connection terminals 80 is shown in FIG. 2 for convenience of explanation. The end member 64 is mounted in such a manner as to seal the entire structure inside the solenoid 3 contained in the casing 60 from below. The ends of the connection terminals 80 are led out from the end member 64, and a connector of a not-shown external power supply is connected thereto. The end member 64 also functions as a connector portion through which the connection terminal 80 is exposed.

The control valve 1 configured as above is secured into a mounting hole (not shown) formed in the compressor 101 via a washer. A plurality of O-rings, which are set between the mounting holes and the control valve 1 and which achieve the sealing capability, are fitted on an outer peripheral surface of the control valve 1. Specifically, annular grooves are formed on peripheries of the body 5 above and below the port 12, respectively, and O-rings 82 and 84 are fitted on the annular grooves. An annular groove is also formed on a periphery of the connecting member 62 below the port 14, and an O-ring 86 is fitted on the annular groove. Furthermore, an O-ring 88 is fitted on a connection area where the casing 60 and the end member 64 are connected. Specifically, a stepped portion is formed between a lower end of the casing 60 and an upper end of the end member 64, and the O-ring 88 is secured to the stepped portion. An outer peripheral portion of the end member 64, which forms the stepped portion, constitutes the support 65 that supports the O-ring 88. There O-rings 82, 84, 86, 88 are seal rings that are all made of resin.

A plurality of communicating holes 69, which communicate an inner space and an outer space of the casing 60, are formed on a lateral surface of the casing 60. The communicating hole 69 functions not only as an air bleed hole, which is used when the control valve 1 is mounted to the mounting hole of the compressor 101, but also as a pressure leakage hole, through which the pressure is leaked so that the pressure surrounding the control valve 1 does not become excessively high. Also, a space is formed between the end member 64 and the sleeve 52. A communicating hole 79, through which the space and the exterior communicate, is formed in a bottom of the end member 64. The communicating hole 79 is an air hole through which to release air in the space to the exterior when the sleeve 52 and the end member 64 are assembled together, and functions as a pressure releasing passage through which a pressure occurring in the space is to be released when they are to be assembled. Also, a pressure leakage passage 81, which connects the communicating hole 69 and the communicating hole 79, is formed inside the solenoid 3. The pressure leakage passage 81 communicates with the communicating hole 69 on one hand and is also led out to the outside air through the communicating hole 79 on the other hand. The pressure leakage passage 81 permits the pressure inside the mounting hole of the compressor 101 to be leaked out to the outside air. The detail of this will be discussed later.

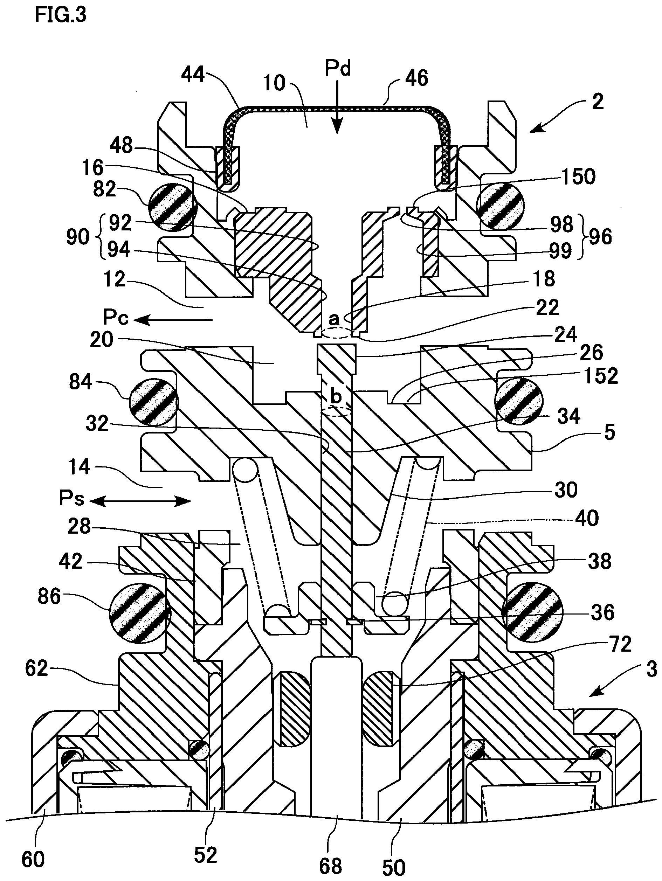

FIG. 3 is a partially enlarged cross-sectional view of the upper half of FIG. 2.
The diameter of a through-hole 90, which is formed in a center of the valve seat forming member 16, is reduced in a lower half thereof. This reduced diameter portion of the through-hole 90 forms the valve hole 18. In other words, the upper half of the through-hole 90 is a large-diameter part 92, whereas the lower half thereof is a small-diameter part 94. And the small-diameter part 94 forms the valve hole 18. A connection area of the through-hole 90 in between the large-diameter part 92 and the small-diameter part 94 is a tapered surface where the inside diameter thereof is gradually reduced downward. The diameter of the through-hole 90 is reduced in stages from an upstream side to a downstream side.

A bleed hole 96 in parallel with the through-hole 90 is formed in radially outward direction of the through-hole 90 in the valve seat forming member 16. The bleed hole 96 is used to ensure the circulation of oil in the compressor 101 by delivering a minimum required amount of refrigerant to the crankcase 116 even when the valve section is closed. The refrigerant contains a lubricating oil in order to ensure a stabilized operation of the compressor 101, and the bleed hole 96 is to ensure the oil circulation inside and outside the crankcase 116.

The bleed hole 96 is formed such that a leak passage 98 located in an upper part thereof and a communication passage 99 located in a lower part thereof are connected together. The inside diameter of the leak passage 98 is of a size to a degree that the refrigerant is made to leak therethrough, and the inside diameter thereof is fairly smaller than that of the valve hole 18. The inside diameter of the communication passage 99 is smaller than that of the large-diameter part 92 of the through-hole 90 and larger than that of the small-diameter part 94 thereof. In a modification, the inside diameter of the communication passage 99 may be greater than or equal to that of the large-diameter part 92 of the through-hole 90 or may be less than or equal to that of the small-diameter part 94 thereof.

A connection area of the leak passage 98 and the communication passage 99 is a tapered surface where the inside diameter thereof is gradually enlarged downward. The diameter of the bleed hole 96 is enlarged in stages from an upstream side to a downstream side. An annular raised portion 150 is formed on a top surface of the valve seat forming member 16 in such a manner as to surround the through-hole 90, and the raised portion 150 is of a stepped shape such that a radially inward portion and a radially outward portion of the valve seat forming member 16 are lower than the raised portion 150. The width of the raised portion 150 is sufficiently small and is less than or equal to that of the valve hole 18 in the present embodiment. The leak passage 98 is opened upward in a position of the raised portion 150.

As described above, the bleed hole 96 is formed such that an inlet of refrigerant has a small diameter and the inlet thereof is opened on the top surface of a stepped shape. Thus, the entry of foreign material through the bleed hole 96 is prevented or suppressed. In other words, if a foreign material, whose size is smaller than the mesh size (mesh width) of the filter member 44, enters the port 10, it is highly improbable that the foreign material will enter through the bleed hole 96. This is because the width of the raised portion 150 is sufficiently small and the size of the inlet of the bleed hole 96 is smaller than the width of the raised portion 150. If the foreign material hits the raised portion 150, it is highly probable that the foreign material is dropped to a lower position inside or outside the raised portion 150. In particular, even though the refrigerant flows through the bleed hole 96 when the valve section is closed, the foreign material contained in the refrigerant is unlikely to be led into the bleed hole 96. If the foreign material enters the port 10 when the valve section is open, most of such foreign material will pass through the valve hole 18 and be discharged from the port 12.

Also, in the valve chamber 20, the guide portion 30 protrudes in a central part of the upper surface of the partition wall 26 and thereby an annular groove 152 is formed on the periphery of this protrusion (the guide portion 30). The outside diameter of the valve element 24 is slightly larger than that of the actuating rod 34 located immediately beneath the valve element 24. Thus, if the foreign material enters the valve chamber 20 through the valve hole 18, it is highly improbable that the foreign material will enter a sliding portion of the actuating rod 34 relative to the guiding passage 32. In the event that the foreign material passes through the valve hole 18, most of such the foreign material will be discharged through the port 12 or stay on in the annular groove 152 even though it should remain in the valve chamber 20. Thus, the remaining foreign material is less likely to enter a spacing or gap between the actuating rod 34 and the guiding passage 32. In other words, the annular groove 152 can function to trap the foreign material therein. Hence, this structure prevents the valve element 24 from being locked as a result of the entanglement of foreign material in the sliding portion of the actuating rod 34 relative to the guiding passage 32. In the present embodiment, a seal section diameter **a** (the inside diameter of the valve hole 18) of the valve element 24 is equal to a diameter **b** of the sliding portion of the actuating rod 34 (**a=b**).

In the present embodiment, as described earlier, the guide portion 30 protrudes as a larger protrusion on a working chamber 28 side than a valve chamber 20 side. Thereby, a lower end of the actuating rod 34 can protrude from a lower end position of the body 5 (i.e., a lower end opening of the small-diameter part 42). This enables the retaining ring 36 to be easily mounted to the actuating rod 34. In the light of this, in the present embodiment, the guide portion 30 is configured such that the guide portion 30 is positioned in a lower part of the body 5. This configuration and arrangement ensure a more stabilized guiding function of the guide portion 30 and maintain an excellent workability when the retaining ring 36 is to be mounted. Since the actuating rod 34 will not be unnecessarily long, the body 5 and eventually the control valve 1 are made smaller-sized.

Furthermore, in the present embodiment as described above, the guide portion 30 and the spring 40 are each taper-shaped such that the outside diameter thereof becomes gradually smaller downward. Thus, a lower half of the spring 40 is contained in an upper end opening of the core 50, and the outside diameter of the small-diameter part 42 is made as small as possible. Thereby, the outside diameter of the connecting member 62 is made smaller, and an O-ring whose outside diameter is smaller can be selected as the O-ring 86. As a result, when the control valve 1 is to be mounted through the mounting holes of the compressor 101, the effect of the refrigerant pressure acting in a direction opposite to a mounting direction is reduced.

Now refer back to FIG. 2. In the above-described configuration, the diameter of the actuating rod 34 is of a size approximately identical thereto. Thus, the differential pressure (Pd - Ps) between the discharge pressure Pd and the suction pressure Ps practically acts on the valve element 24 for a pressure-receiving area having approximately the same size as that of the valve hole 18. The valve element 24 operates and moves such that the differential pressure (Pd - Ps) is kept at a preset differential pressure set by a control current supplied to the solenoid 3.

A basic operation of the control valve for the variable displacement compressor is now explained.

In the control valve 1, when the solenoid 3 is turned off, the valve element 24 gets separated away from the valve seat 22 by the net force of the springs 40 and 78 in a valve opening direction with the result that the valve section is remained at a fully opened state. At this time, a high-pressure refrigerant having the discharge pressure Pd introduced into the port 10 from the discharge chamber 114 of the compressor 101 passes through the fully-opened valve section and then flows into the crankcase 116 through the port 12. As a result, the crank pressure Pc is raised and the compressor 101 carries out a minimum capacity operation where the discharging capacity is the minimum.

When, on the other hand, at the startup of the automotive air conditioner or when the cooling load is the maximum, the value of current supplied to the solenoid 3 is the maximum and the plunger 54 is attracted by a maximum suction force of the core 50. At this time, the actuating rod 34 (including the valve element 24), the shaft 68 and the plunger 54 operate and move integrally altogether in a valve closing direction, and the valve element 24 is seated on the valve seat 22. The crank pressure Pc drops by this valve closing movement and therefore the compressor 101 carries out a maximum capacity operation where the discharging capacity is the maximum.

When the value of current supplied to the solenoid 3 is set to a predetermined value while the capacity is being controlled, the actuating rod 34 (including the valve element 24), the shaft 68 and the plunger 54 operate and move integrally altogether. At this time, the valve element 24 stops at a valve-lift position. This valve-lift position is a position where five loads/forces are all balanced thereamong. Here, the five loads/forces are the spring load of the spring 40 that biases the actuating rod 34 in a valve opening direction, the spring load of the spring 78 that biases the plunger 54 in a valve opening direction, the load of the solenoid 3 that biases the plunger 54 in a valve closing direction, the force by the discharge pressured Pd that the valve element 24 receives in a valve opening direction, and the force by the suction pressure Ps that the valve element 24 receives in a valve closing direction.

If, in this balanced state, the rotating speed of the compressor 101 rises simultaneously with an increased engine speed and thereby the discharging capacity increases, the differential pressure (Pd - Ps) will increase and then the force in a valve opening direction will exert on the valve element 24. As a result, the valve element 24 further uplifts its position and thereby the flow rate of refrigerant flowing from the discharge chamber 114 to the crankcase 116 increases. This, in turn, causes the crank pressure Pc to rise and then the compressor 101 operates in a direction such that the discharging capacity is reduced. Then the compressor 101 is controlled such that the differential pressure (Pd - Ps) becomes the preset differential pressure. If the engine speed drops, the compressor 101 operates in a manner reverse to the aforementioned operation and then the compressor 101 is controlled such that the differential pressure (Pd - Ps) becomes the preset differential pressure.

A description is now given of a pressure release structure in the control valve.

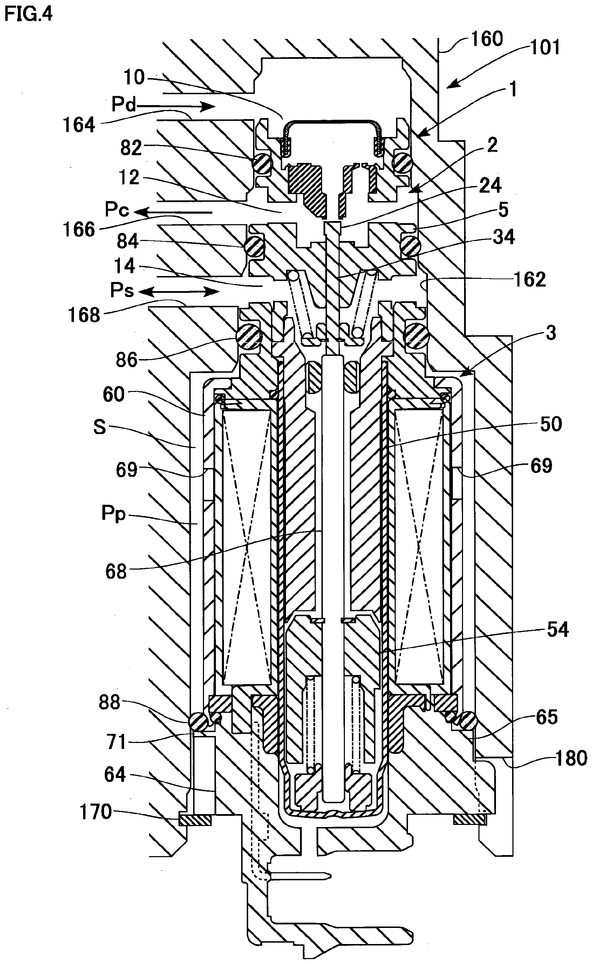

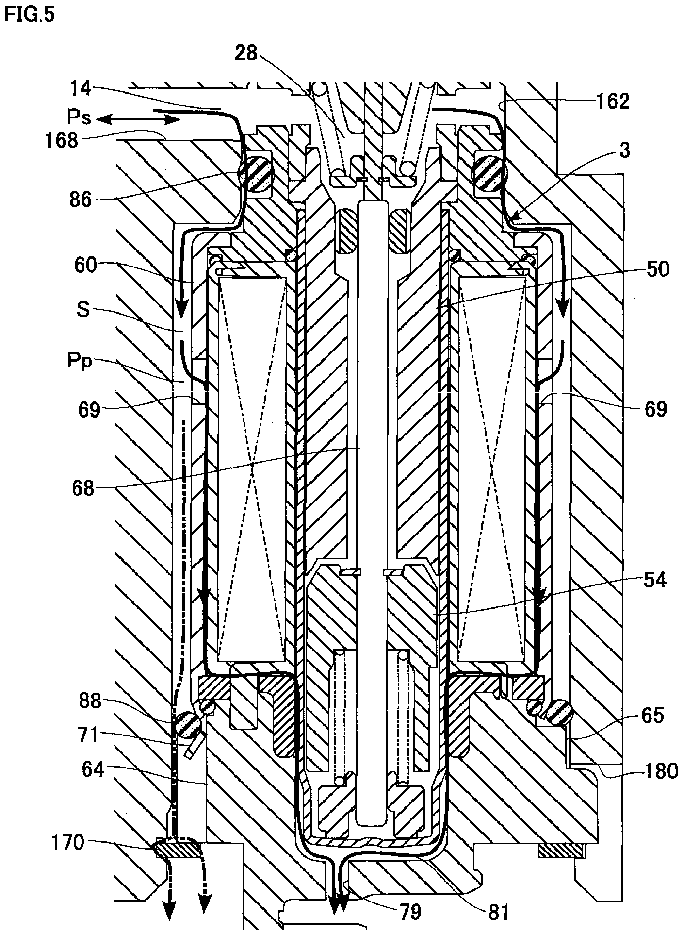

FIG. 4 is a partial cross-sectional view showing a state where a control valve is mounted on the compressor 101. FIG. 5 is an enlarged view of the lower half of FIG. 4.

As shown in FIG. 4, a mounting hole 162, which is used for mounting the control valve 1, is formed in a housing 160 of the compressor 101. A communicating path 164 communicating with the discharge chamber, a communicating path 166 communicating with the crankcase and a communicating path 168 communicating with the suction chamber are formed in the housing 160, and these communicating paths are open to the mounting hole 162. The mounting hole 162 is formed such that the diameter thereof is enlarged in stages (in a plurality of steps) starting from the inner most part of the mounting hole 162 toward an opening end (i.e., from top to bottom in FIG. 4). Thus, the communicating paths 164, 166 and 168 are open thereto in this order starting from the inner most step thereof.

The control valve 1 is inserted into the mounting hole 162 from a tip side thereof, and a rear end thereof is secured into the mounting hole 162 by way of a washer 170 (which functions as a "fixed member"). The port 10 is arranged that it is located counter to the communicating path 164. The port 12 is arranged that it is located counter to the communicating path 166. The port 14 is arranged that it is located counter to the communicating path 168. A notch (cutout) 180, through which the connector portion of the control valve 1 is exposed as well as through which an external connector is inserted, is formed on a side wall of the housing 160.

The above-described O-rings 82, 84, 86 and 88 are fitted on the outer peripheral surface of the control valve 1 in such a manner as to be inserted around (placed around) the control valve 1; these O-rings maintain high sealing property (sealing power) between each communicating path and each port as well as between the interior and the exterior of the mounting hole 162. Specifically, the sealing property between the communicating path 164 and the communicating path 166 is ensured by the O-ring 82, and the sealing property between the port 10 and port 12 is also ensured thereby. Similarly, the sealing property between the communicating path 166 and the communicating path 168 is ensured by the O-ring 84, and the sealing property between the port 12 and port 14 is also ensured thereby. The sealing property between the communicating path 168 and atmospheric air (outside air) is ensured by the O-ring 86. Further, the interior and the exterior of the mounting hole 162 is ensured by the O-ring 88.

The O-ring 86 functions as a "first seal ring" that restricts the external leakage of refrigerant by way of a gap between the body 5 and the mounting hole 162. Also, the O-ring 88 functions as a "second seal ring" that restricts the entry of moisture by way of a gap between the solenoid 3 and the mounting hole 162. However, as discussed above, carbon dioxide, which operates under a high pressure, is used as the refrigerant in the present embodiment. Thus, there is a problem where the refrigerant is more likely to permeate O-rings than alternate CFCs. For this reason, the problem where the refrigerant may be permeated and finally leaked in the O-ring 86, in particular, located on the boundary between the refrigerant passage and the outside air needs to be taken care of.

In other words, a case is anticipated where the pressure of a space S between the O-ring 86 and the O-ring 88 in the mounting hole 162 gets higher than the atmospheric pressure due to the permeation and leakage of the refrigerant. In this case, as shown in FIG. 5, where the outside diameter of the O-ring 88 is substantially larger than that of the O-ring 86, a pressure toward an outward direction of the mounting hole 162 from an inward direction thereof acts on the O-ring 88. This pressure becomes a force by which the control valve 1 is pushed out toward the exterior; this may possibly make it difficult for the control valve 1 to be stably held inside the mounting hole 162, depending on the fixed strength of the washer 170.

In the light of this, in this present embodiment, a thin-walled low strength part 71 is provided in a part of a support 65 in the end member 64. This configuration allows the low strength part 71 to be deformed or fractured and thereby allows the sealing power of the O-ring 88 to be lowered, when a pressure Pp of the space S is greater than or equal to a preset pressure. More specifically, as shown by arrows in FIG. 5, assume now that part of refrigerant introduced from the port 14 has permeated the O-ring 86. In this case, the inflow of the refrigerant causes the pressure Pp of the space S to increase. As shown by solid arrows, the part of refrigerant introduced into the space S is led out to the outside air by way of the pressure leakage passage 81, so that the rise of pressure in the space S is suppressed by as much as the part of refrigerant released to the exterior. However, the interior of the connector portion of the end member 64 is almost sealed off as a result of the external connector being connected to the connector portion thereof and therefore an amount of refrigerant led out to the outside air is small. Thus there is a limit to suppressing the rise of pressure and therefore there is concern over the possibility that the washer 170 may be broken and the control valve 1 may be pushed out from the mounting hole 162 when the pressure Pp gets excessively high.

In consideration of this possibility, in the present embodiment, the pressure resistance strength of the low strength part 71 is set (designed) such that the pressure resistance strength thereof is less than the pressure resistance strength of the washer 170 as well as the fixed strength thereof (namely, the fixed strength of the washer 170 to the mounting hole 162). As shown by two-dot chain line arrows in FIG. 5, the configuration is such that when the pressure Pp becomes a preset pressure Pₛₑₜ or above, the low strength part 71 is fractured, for example, as shown in FIG. 5, then the O-ring 88 is partially deformed and the pressure Pp is released to the outside air. Specifically, the low strength part 71 functions as a "pressure response part" that lowers the sealing power of the O-ring 88 and releases the pressure to the outside air. By employing the present embodiment, in the event that the pressure of the refrigerant gets high, the pressure Pp of the space S will not be excessively high, so that the falling-off of the control valve 1 from the compressor 101 can be reliably prevented.

### [Second Embodiment]

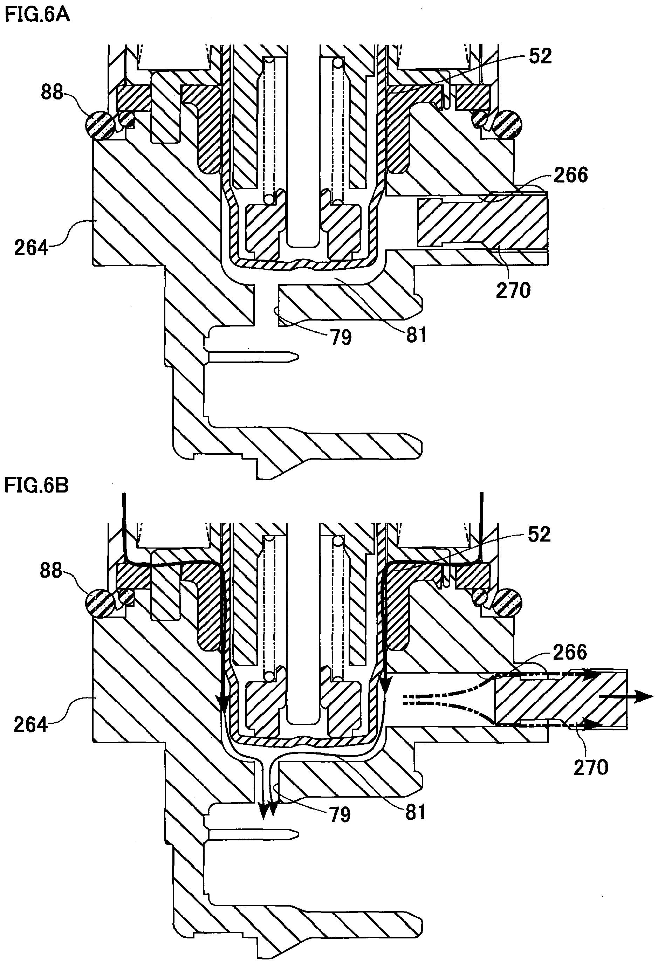

FIGS. 6A and 6B show major components of a control valve according to a second embodiment. A description is given hereinbelow centering around different features from the first embodiment. FIG. 6A is a partially enlarged cross-sectional view of the lower half of the control valve. FIG. 6B shows a state where a pressure response structure is enabled and caused to function. Note that the structural components of the second embodiment closely similar to those of the first embodiment are given the identical reference numerals.

In the above-described first embodiment, the structure is shown where the sealing property of the second seal ring (waterproof ring) is invalidated or disabled as the "pressure response part" so as to release the pressure Pp to the outside air. In the present embodiment, the pressure response structure, where the hermetically-closed property in the pressure leakage passage 81 is lost and subsequently the pressure Pp can be reduced, is employed without fracturing the second seal ring.

In other words, as shown in FIG. 6A, in the present embodiment, an air hole 266, which is largely open to a lateral side of an end member 264, is formed on the lateral side of the end member 264, and a plugging component 270 for sealing off the air hole 266 is press-fitted thereto. The air hole 266 is exposed from the notch 180 (see FIG. 4) of the housing 160. When, as shown in FIG. 6B, the pressure Pp becomes a reference pressure Pb or above, the plugging component 270 is separated away from the air hole 266 and thereby the pressure in the pressure leakage passage 81 is escaped to the outside air (see two-dot chain line arrows). In other words, the air hole 266 and the plugging component 270 function as the "pressure response structure" that is used to reduce the pressure Pp by losing the hermetically-closed property in the pressure leakage passage 81. Although, in the present embodiment, the same value as the preset pressure Pₛₑₜ is set as the reference pressure Pb, the reference pressure Pb may be set to a different value from the preset pressure Pₛₑₜ. By employing the present embodiment, in the event that the pressure of the refrigerant gets high, the pressure Pp of the space S will not be excessively high, so that the falling-off of the control valve from the compressor can be reliably prevented.

### [Third Embodiment]

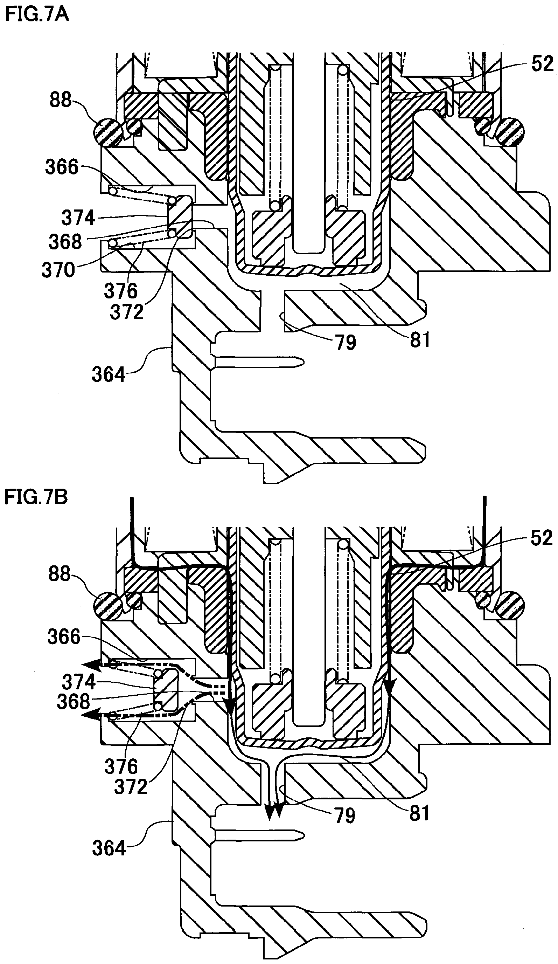

FIGS. 7A and 7B show major components of a control valve according to a third embodiment. A description is given hereinbelow centering around different features from the second embodiment. FIG. 7A is a partially enlarged cross-sectional view of the lower half of the control valve. FIG. 7B shows a state where a pressure response structure is enabled and caused to function. Note that the structural components of the third embodiment closely similar to those of the second embodiment are given the identical reference numerals.

In the present embodiment, as shown in FIG. 7A, an air hole 366, which is largely open to a lateral side of an end member 364, is formed on the lateral side thereof. The air hole 366 is of a stepped hole shape; a small-diameter part in the back thereof is a sub-valve hole 368, whereas a large-diameter part on a front side thereof is a sub-valve chamber 370. A sub-valve seat 372 is formed on an opening end of the sub-valve hole 368 at a sub-valve chamber 370 side. A sub-valve element 374 for opening and closing the air hole 366 by touching and leaving the sub-valve chamber 370 and a spring 376 for biasing the sub-valve element 374 in a valve closing direction are provided in the sub-valve chamber 370. When, as shown in FIG. 7B, the pressure Pp becomes a reference pressure Pb or above, the sub-valve element 374 is separated away from the sub-valve seat 372 so as to have the air hole 366 opened and thereby the pressure in the pressure leakage passage 81 is escaped to the outside air (see two-dot chain line arrows). In other words, an open/close structure of the air hole 366 realized by using the sub-valve element 374 functions as the "pressure response structure" that is used to reduce the pressure Pp by losing the hermetically-closed property in the pressure leakage passage 81. By employing the present embodiment, in the event that the pressure of the refrigerant gets high, the pressure Pp of the space S will not be excessively high, so that the falling-off of the control valve from the compressor can be reliably prevented. Also, when the pressure Pp drops, the sub-valve element 374 is seated on the sub-valve seat 372 so as to have the air hole 366 closed again. This allows the pressure response structure to be repeatedly used and caused to function.

### [Fourth Embodiment]

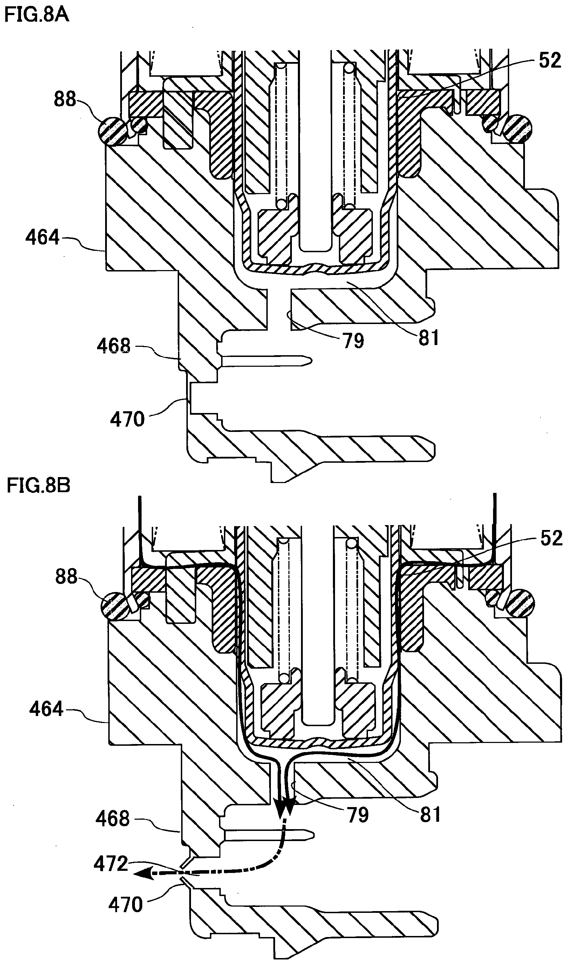

FIGS. 8A and 8B show major components of a control valve according to a fourth embodiment. A description is given hereinbelow centering around different features from the second embodiment. FIG. 8A is a partially enlarged cross-sectional view of the lower half of the control valve. FIG. 8B shows a state where a pressure response structure is enabled and caused to function. Note that the structural components of the fourth embodiment closely similar to those of the second embodiment are given the identical reference numerals.

In the present embodiment, as shown in FIG. 8A, a thin-walled low strength part 470 is provided in a connector portion 468, to which the external connector is connected, in an end member 464. When, as shown in FIG. 8B, the pressure Pp of the space S becomes a reference pressure Pb or above, the low strength part 470 is fractured, thereby an airflow part 472 is formed and, as a result, the pressure in the pressure leakage passage 81 is escaped to the outside air (see two-dot chain line arrows). In other words, the low strength part 470 functions as the "pressure response structure" that is used to reduce the pressure Pp by losing the hermitically-closed property in the pressure leakage passage 81. By employing the present embodiment, in the event that the pressure of the refrigerant gets high, the pressure Pp of the space S will not be excessively high, so that the falling-off of the control valve from the compressor can be reliably prevented.

The description of the present invention given above is based upon illustrative embodiments. These embodiments are intended to be illustrative only and it will be obvious to those skilled in the art that various modifications could be developed within the technical idea underlying the present invention.

In the above-described embodiments, exemplary configurations are shown where the control valve 1 is housed into the mounting hole 162 and is then fixedly held by the washer 170. In a modification, the configuration may be such that the control valve 1 is supported by screws or other fixed members, instead of the configuration where the control valve 1 is stopped by the washer 170.

Although not mentioned in the above-described embodiments, the O-ring 88 (the second seal ring) itself may function as the "the pressure response part". For example, a part of the O-ring 88 may be used a thin-walled part; when the pressure Pp becomes the preset pressure Pₛₑₜ or above, this thin-walled part may be fractured so as to reduce the sealing power of the O-ring 88.

In the above-described embodiments, an exemplary case is shown where the bottomed sleeve 52 is used as a sealing member for sealing an end portion of the core 50 but Other structures may be employed. For example, another plugging member may be attached or assembled to an opening end of the cylindrical sleeve so as to achieve a sealing structure. Also, in the above-described embodiments, an example is shown where the plunger is arranged opposite to the body 5 in relation to the core 50. Instead, the positional relation between the plunger and the core may be switched. In this case, an end portion of the core opposite to the plunger may be sealed off by the sealing member.

In the above-described embodiments, an example is shown where the control valve 1 is configured as a so-called (Pd - Ps) differential pressure valve. In a modification, the control valve 1 may be configured as a so-called (Pc - Ps) differential pressure valve, for instance. In this (Pc - Ps) differential pressure valve, a differential pressure (Pc - Ps) between the crank pressure Pc and the suction pressure Ps is brought closer to a preset differential pressure, which is a control target value. In other words, each of the above-described structures according to the above-described embodiments may be applied to a control valve that varies the discharging capacity of the variable displacement compressor, for compressing the refrigerant led into the suction chamber and then discharging the compressed refrigerant from the discharge chamber, by regulating the flow rate of refrigerant led out to the suction chamber from the crankcase (control chamber). Alternatively, the control valve 1 may be applied to a so-called Ps control valve in which the suction pressure Ps is brought closer to a preset pressure, which is a control target value. In particular, when those control valves are to be applied to the supercritical refrigeration cycle that uses carbon dioxide or the like as the refrigerant, the functions of the above-described respective structures are effectively achieved.

In the above-described embodiments, an example is shown where the control valve having the above-described respective structures is applied to the supercritical refrigeration cycle that uses carbon dioxide as the refrigerant. In a modification, a similar control valve may be applied to a supercritical refrigeration cycle that uses a substance other than carbon dioxide as the refrigerant. Alternatively, a similar control valve may be applied to a refrigeration cycle that does not operate in a supercritical range but to the refrigeration cycle where the pressure of refrigerant gets high. For example, it may be applied to a refrigeration cycle where HFC-134a, HFO-1234yf or the like is used as the refrigerant. In such a case, the second seal ring may be so configured as to seal off the refrigerant of the discharge pressure Pd and the crank pressure Pc that become higher pressured than the suction pressure Ps.

Note that the control valves according to the above-described second to fourth embodiments may be defined as generic ones as described below. That is, the control valve, which controls the flow of refrigerant in a variable displacement compressor (101), is housed within and assembled into a mounting hole (162) from a tip side thereof, the mounting hole (162) being formed in a housing (160) of the compressor (101). The control valve includes: a body (5) having a plurality of ports (10, 12, 14) through which the refrigerant is introduced or delivered, a refrigerant passage through which the refrigerant is made to pass, and a valve hole (18) formed in the refrigerant passage; a valve element (24) for opening and closing a valve section, the valve element (24) being arranged in such a manner as to move toward and away from the valve hole (18); a solenoid (3) that generates a force with which to drive the valve element (24) in a valve closing direction in accordance with an amount of current supplied, the solenoid (3) being arranged in a rear end side of the body (5); a first seal ring (86), made of resin, which restricts the external leakage of refrigerant by way of a gap between the body (5) and the mounting hole (162), the first seal ring (86) being assembled in such a manner as to be placed around the body (5); and a second seal ring (88), made of resin, which restricts the entry of moisture by way of a gap between the solenoid (3) and the mounting hole (162), the second seal ring (88) being assembled in such a manner as to be placed around the solenoid (3).

The solenoid (3) includes: a core (50) fixed to the body (5); a plunger (54) disposed opposite to the core (50) in a direction of axis line, the plunger (54) being displaceable integrally with the valve element (24); a casing (60), connected to the body (5), which contains the core (50) and the plunger (54) thereinside; and an end member (264, 364, 464) provided in such a manner as to close a rear end opening of the casing (60). A communicating hole (69), which communicates an inner space and an outer space of the casing (60), is formed in a part of the casing (60) that is located in a space (S) formed between the first seal ring (86) and the second seal ring (88) in the mounting hole (162). A pressure leakage passage (81) is formed inside the casing (60) and the end member (264, 364, 464), and the pressure leakage passage (81) permits the pressure inside the space (S) to be leaked out to the outside air in a manner such that the pressure leakage passage (81) communicates with the communicating hole (69) on one hand and is led out to the outside air on the other hand. The control valve includes a pressure response structure that reduces the hermetically-closed property in the pressure leakage passage (81) when the pressure of the pressure leakage passage (81) becomes a reference pressure or above.

The pressure response structure may include: an air hole (266), formed in the end member (264), which communicates an inner space and an outer space of the end member (264); and a plugging component (270), press-fitted to the air hole (266), which is configured such that when the pressure of the pressure leakage passage (81) becomes the reference pressure or above, the plugging component (270) can be separated away from the air hole (266).

The pressure response structure may include: an air hole (366), formed in the end member (364), which communicates the inner space and the outer space of the end member (364); a sub-valve seat (372) provided in the air hole (366); a sub-valve element (374) that opens and closes the air hole (366) by touching and leaving the sub-valve seat (372); and a biasing member (376) that biases the sub-valve element (374) in a valve closing direction. The pressure response structure may have the air hole (366) opened such that when the pressure of the pressure leakage passage (81) becomes the reference pressure or above, the sub-valve element (374) is separated away from the sub-valve seat (372).

The present invention is not limited to the above-described embodiments and modifications only, and those components may be further modified to arrive at various other embodiments without departing from the scope of the invention. Also, various other embodiments may be further formed by combining, as appropriate, a plurality of structural components disclosed in the above-described embodiments and modification. Also, one or some of all of the components exemplified in the above-described embodiments and modifications may be left unused or removed.

## Claims

1. A control valve (1) for controlling a flow of refrigerant in a variable displacement compressor (101), the control valve (1) being housed within and assembled into a mounting hole (162) from a tip side thereof, the mounting hole (162) being formed in a housing (160) of the compressor (101), the control valve (1) comprising:
a body (5) having a plurality of ports (10, 12, 14) through which the refrigerant is introduced or delivered, a refrigerant passage through which the refrigerant is made to pass, and a valve hole (18) formed in the refrigerant passage;
a valve element (24) for opening and closing a valve section, the valve element (24) being arranged in such a manner as to move toward and away from the valve hole (18);
a solenoid (3) that generates a force with which to drive the valve element (24) in a valve closing direction in accordance with an amount of current supplied, the solenoid (3) being arranged in a rear end side of the body (5);
a first seal ring (86), made of resin, which restricts an external leakage of refrigerant by way of a gap between the body (5) and the mounting hole (162), the first seal ring (86) being assembled in such a manner as to be placed around the body (5); and
a second seal ring (88), made of resin, which restricts entry of moisture by way of a gap between the solenoid (3) and the mounting hole (162), the second seal ring (88) being assembled in such a manner as to be placed around the solenoid (3); **characterised by**
a pressure response part (71) that lowers a sealing power of the second seal ring (88) and releases a pressure (Pp) to outside air, when the pressure (Pp) of a space (S) between the first seal ring (86) and the second seal ring (88) in the mounting hole (162) is greater than or equal to a preset pressure.

2. A control valve (1) according to claim 1, the solenoid (3) including:
a core (50) fixed to the body (5);
a plunger (54) disposed opposite to the core (50) in a direction of axis line, the plunger (54) being displaceable integrally with the valve element (24);
a casing (60), connected to the body (5), which contains the core (50) and the plunger (54) thereinside; and
an end member (64) provided in such a manner as to close a rear end opening of the casing (60),
wherein the pressure response part (71) is constituted by a low strength part of a support (65) that is provided in the casing (60) or the end member (64) and that supports the second seal ring (88), and
the low strength part lowers the sealing power of the second seal ring (88) when the low strength part is deformed or fractured.

3. A control valve (1) according to claim 2, wherein a communicating hole (69), which communicates an inner space and an outer space of the casing (60), is formed in a part of the casing (60) where the space (S) is arranged, and
wherein a pressure leakage passage (81) is formed inside the casing (60) and the end member (64), and
the pressure leakage passage (81) permits the pressure (Pp) inside the space (S) to be leaked out to the outside air in a manner such that the pressure leakage passage (81) communicates with the communicating hole (69) and is led out to the outside air.

4. A control valve (1) according to any one of claim 1 to claim 3, wherein the control valve (1) is applied to a refrigeration cycle in which a refrigeration operation is performed in a supercritical range exceeding a critical temperature of the refrigerant.

5. A control valve (1) according to any one of claim 1 to claim 4,
wherein the control valve (1) varies a discharging capacity of the variable displacement compressor (101), for compressing the refrigerant led into a suction chamber (110) and discharging the compressed refrigerant from a discharge chamber (114), by regulating a flow rate of the refrigerant led into a control chamber (116) from the discharge chamber (114),
wherein a discharge chamber communication port (10) communicating with the discharge chamber (114), a control chamber communication port (12) communicating with the control chamber (116), and a suction chamber communication port (14) communicating with the suction chamber (110) are formed in this order from a tip side of the body (5),
wherein a differential pressure (Pd - Ps) between a discharge pressure (Pd) of the discharge chamber (114) and a suction pressure (Ps) of the suction chamber (110) is controlled such that the differential pressure (Pd - Ps) is kept at a preset differential pressure according to a value of current supplied to the solenoid (3), and
wherein the first seal ring (86) is provided opposite to the control chamber communication port (12) relative to the suction chamber communication port (14).

## Patentansprüche

1. Regelventil (1) zur Regelung eines Kühlmittelstroms in einem Verdichter mit veränderlicher Verdrängung (101), wobei das Regelventil im Inneren einer Montagebohrung (162) untergebracht und von einer Spitzenseite her montiert ist, und wobei die Montagebohrung (162) in einem Gehäuse (160) des Verdichters (101) ausgebildet ist, welches Regelventil folgendes aufweist:
einen Ventilkörper (5) mit einer Vielzahl von Anschlüssen (10, 12, 14), durch welche das Kühlmittel eingeleitet bzw. abgegeben wird, einen Kühlmittelkanal, durch welchen das Kühlmittel geleitet wird, und eine Ventilöffnung (18), die in dem Kühlmittelkanal ausgebildet ist;
ein Ventilelement (24) zum Öffnen und Schließen eines Ventilabschnitts, wobei das Ventilelement (24) in der Weise angeordnet ist, dass es sich zur Ventilöffnung (18) hin und von dieser weg bewegt;
einen Elektromagneten (3), der eine Kraft erzeugt, mit welcher in Entsprechung zu einer zugeführten Strommenge das Ventil (24) in einer Ventilschließrichtung anzutreiben ist, wobei das Magnetventil (3) auf der Seite eines rückwärtigen Endes des Ventilkörper (5) angeordnet ist;
einen ersten Dichtungsring (86), der aus Kunststoff besteht und der ein Austreten von Kühlmittel nach außen mittels eines Spalts zwischen dem Ventilkörper (5) und der Montagebohrung (162) begrenzt, wobei der erste Dichtungsring (86) in der Weise montiert wird, dass er um den Ventilkörper (5) angeordnet wird; und
einen zweiten Dichtungsring (88), der aus Kunststoff besteht und der das Eindringen von Feuchtigkeit mittels eines Spalts zwischen dem Elektromagneten (3) und der Montagebohrung (162) begrenzt, wobei der zweite Dichtungsring in der Weise montiert wird, dass er um den Ventilkörper (5) angeordnet wird;
**gekennzeichnet durch** ein auf Druck ansprechendes Teil (71), welches die Dichtkraft des zweiten Dichtungsrings (88) vermindert und einen Druck (Pp) in die Luft nach außen freisetzt, wenn der Druck (Pp) in einem Raum (S) zwischen dem ersten Dichtring (86) und dem zweiten Dichtring (88) in der Montageöffnung (162) größer als ein voreingestellter Druckwert oder gleich diesem ist.

2. Regelventil (1) nach Anspruch 1, bei welchem das Magnetventil (3) folgendes umfasst:
einen am Ventilkörper (5) befestigten Magnetkern (50);
einen Magnetstößel (54), der gegenüber dem Magnetkern (50) in einer Richtung der Achslinie angeordnet ist, wobei der Magnetstößel (54) integral mit dem Ventilelement (24) verlagerbar ist;
ein mit dem Ventilkörper (5) verbundenes Gehäuse (60), welches den Magnetkern (50) und den Magnetstößel (54) in seinem Inneren enthält; und
ein Endteil (64), welches in der Form vorgesehen ist, dass es eine Öffnung am rückwärtigen Ende des Gehäuses (60) verschließt,
bei welchem das auf Druck ansprechende Teil (71) von einem Abschnitt mit geringerer Festigkeit an einem Abstützteil (65) gebildet wird, welches in dem Gehäuse (60) oder dem Endteil (64) vorgesehen ist und welches den zweiten Dichtring (88) abstützt, und
bei welchem das Teil mit geringerer Festigkeit die Dichtkraft des zweiten Dichtrings (88) verringert, wenn das Teil mit geringerer Festigkeit verformt oder gebrochen wird.

3. Regelventil (1) nach Anspruch 2, bei welchem eine Verbindungsöffnung (69), die einen Innenraum mit einem Außenraum des Gehäuses verbindet, in einem Teil des Gehäuses (609 ausgebildet ist, wo der Raum (S) angeordnet ist, und
bei welchem ein Druckentweichkanal (83) ein Entweichen des Drucks (Pp) im inneren des Raumes (S) in die Außenluft in der Weise gestattet, dass der Druckentweichkanal (81) mit der Verbindungsöffnung (69) in Strömungsverbindung steht und zur Außenluft geführt wird.

4. Regelventil (1) nach einem der Ansprüche 1 bis 3, wobei das Regelventil (1) bei einem Kühlkreislauf eingesetzt wird, in welchem ein Kühlvorgang im superkritischen Bereich abläuft, der eine kritische Temperatur des Kühlmittels übersteigt.

5. Regelventil (1) nach einem der Ansprüche 1 bis 4,
wobei das Regelventil (1) eine Auslasskapazität des Verdichters (101) mit variabler Verdrängung zum Verdichten des in eine Ansaugkammer (110) eingeleiteten Kühlmittels und zu Auslassen des verdichteten Kühlmittels aus einer Auslasskammer (114) durch Regelung der Strömungsgeschwindigkeit des aus der Auslasskammer (114) in eine Regelkammer (116) eingeleiteten Kühlmittels verändert,
bei welchem von einer Spitzenseite des Ventilkörpers (5) her ein Verbindungsanschluss (10) der Auslasskammer zur Verbindung mit der Auslasskammer (114), ein Verbindungsanschluss (12) der Regelkammer zur Verbindung mit der Regelkammer (116) und ein Verbindungsanschluss (14) der Ansaugkammer zur Verbindung mit der Ansaugkammer (110) in dieser Reihenfolge ausgebildet sind,
bei welchem ein Druckunterschied (Pd - Ps) zwischen einem Auslassdruck (Pd) der Auslasskammer (114) und einem Ansaugdruck (Ps) der Ansaugkammer (110) in der Weise geregelt wird, dass der Druckunterschied (Pd - Ps) auf einem voreingestellten Wert des Druckunterschieds in Entsprechung zu einem Wert des dem Elektromagneten (3) zugeführten Stroms gehalten wird, und
bei welchem der erste Dichtring (86) gegenüber von dem Verbindungsanschluss (12) der Regelkammer relativ zum Verbindungsanschluss (14) der Ansaugkammer vorgesehen ist.

## Revendications

1. Vanne de commande (1) destinée à commander un écoulement de réfrigérant dans un compresseur à déplacement variable (101), la vanne de commande (1) étant reçue et assemblée dans un trou de montage (162) depuis un côté de pointe de celle-ci, le trou de montage (162) é tant formé dans un boîtier (160) du compresseur (101), la vanne de commande (1) comprenant:
un corps (5) ayant une pluralité d'orifices (10, 12, 14) à travers lesquels le réfrigérant est introduit ou distribué, un passage de réfrigérant à travers lequel le réfrigérant est amené à passer, et un trou de vanne (18) formé dans le passage de réfrigérant;
un élément de vanne (24) pour ouvrir et fermer un tronçon de vanne, l'élément de vanne (24) étant agencé de manière à se déplacer en direction et loin du trou de vanne (18);
une électrovanne (3) qui génère une force pour entraîner l'élément de vanne (24) dans une direction de fermeture de vanne en fonction d'une quantité de courant fournie, l'électrovanne (3) étant agencée dans un côté d'extrémité arrière du corps (5);
un premier joint d'étanchéité torique (86), réalisé en résine, qui limite une fuite externe de réfrigérant par l'intermédiaire d'un espace entre le corps (5) et le trou de montage (162), le premier joint d'étanchéité torique (86) étant assemblé de manière à être placé autour du corps (5); et
un deuxième joint d'étanchéité torique (88), réalisé en résine, qui limite l'entrée d'humidité par l'intermédiaire d'un espace entre l'électrovanne (3) et le trou de montage (162), le second joint d'étanchéité torique (88) étant assemblé de manière à être placé autour de l'électrovanne (3); **caractérisée par**
une partie de réponse de pression (71) qui abaisse une puissance d'étanchéité du second joint d'étanchéité torique (88) et libère une pression (Pp) vers l'air extérieur lorsque la pression (Pp) d'un espace (S) entre le premier joint d'étanchéité torique (86) et le deuxième joint d'étanchéité torique (88) dans le trou de montage (162) est supérieure ou égale à une pression prédéterminée.

2. Vanne de commande (1) selon la revendication 1, l'électrovanne (3) comprenant:
un noyau (50) fixé au corps (5);
un plongeur (54) disposé à l'opposé du noyau (50) dans une direction de ligne d'axe, le plongeur (54) pouvant être déplacé d'un seul tenant avec l'élément de vanne (24);
un carter (60), relié au corps (5), qui contient le noyau (50) et le plongeur (54) à l'intérieur de celui-ci; et
un élément d'extrémité (64) prévu de manière à fermer une ouverture d'extrémité arrière du carter (60),
dans laquelle la partie de réponse de pression (71) est constituée par une partie à faible résistance d'un support (65) qui est prévu dans le carter (60) ou l'élément d'extrémité (64), et qui supporte le second joint d'étanchéité torique (88), et
la partie à faible résistance diminue la puissance d'étanchéité du second joint d'étanchéité torique (88) lorsque la partie à faible résistance est déformée ou fracturée.

3. Vanne de commande (1) selon la revendication 2, dans laquelle un trou de communication (69), qui fait communiquer un espace intérieur et un espace extérieur du carter (60), est formé dans une partie du carter (60) où l'espace (S) est agencé, et
dans laquelle un passage de fuite de pression (81) est formé à l'intérieur du carter (60) et de l'élément d'extrémité (64), et
le passage de fuite de pression (81) permet à la pression (Pp) à l'intérieur de l'espace (S) de fuir vers l'air extérieur de telle sorte que le passage de fuite de pression (81) communique avec le trou de communication (69) et sort vers l'air extérieur.

4. Vanne de commande (1) selon l'une quelconque des revendications 1 à 3, dans laquelle la vanne de commande (1) est appliquée à un cycle de réfrigération dans lequel une opération de réfrigération est effectuée dans une plage supercritique dépassant une température critique du réfrigérant.

5. Vanne de commande (1) selon l'une quelconque des revendications 1 à 4, dans laquelle la vanne de commande (1) modifie une capacité de décharge du compresseur à déplacement variable (101), pour comprimer le réfrigérant conduit dans une chambre d'aspiration (110) et décharger le réfrigérant comprimé à partir d'une chambre de décharge (114), en régulant un débit d'écoulement du réfrigérant conduit dans une chambre de commande (116) depuis la chambre de décharge (114),
dans laquelle un orifice de communication de chambre de décharge (10) communiquant avec la chambre de décharge (114), un orifice de communication de chambre de commande (12) communiquant avec la chambre de commande (116), et un orifice de communication de chambre d'aspiration (14) communiquant avec la chambre d'aspiration (110) sont formés dans cet ordre à partir d'un côté de pointe du corps (5),
dans laquelle une pression différentielle (Pd-Ps) entre une pression de décharge (Pd) de la chambre de décharge (114) et une pression d'aspiration (Ps) de la chambre d'aspiration (110) est commandée de telle sorte que la pression différentielle (Pd-Ps) soit maintenue à une pression différentielle prédéterminée en fonction d'une valeur du courant fourni à l'électrovanne (3), et
dans laquelle le premier joint d'étanchéité torique (86) est agencé à l'opposé de l'orifice de communication de chambre de commande (12) par rapport à l'orifice de communication de chambre d'aspiration (14).
